# FASCICULE DE BREVET EUROPEEN

(11) **EP 0 844 546 B1**
(45) Date de publication et mention de la délivrance du brevet: **19.12.2001**
(21) Numéro de dépôt: 97420206.1
(22) Date de dépôt: 06.11.1997
(51) Int. Cl.: G05D 23/02

(54) **Dispositif de commande pour un robinet thermostatique**
Steuerungsvorrichtung für ein Thermostatventil
Control device for a thermostatic valve

(30) Priorité: 22.11.1996 FR 9614554
(43) Date de publication de la demande: 27.05.1998
(73) Titulaire: Comap Abbeville S.A., 80100 Abbeville (FR)
(72) Inventeur: Bruvry, Michel, 80132 Hautvillers (FR); Leger, Jacky, 80132 Neuilly L'Hopital (FR); Delmotte, Thierry, 80100 Abbevile (FR)
(74) Mandataire: Maureau, Philippe

(56) Documents cités:
- CH-A- 451 631
- DE-U- 8 329 702
- FR-A- 2 384 189

## Description

La présente invention a pour objet un dispositif de commande pour un robinet thermostatique.

Les robinets thermostatiques sont utilisés notamment pour des fluides de chauffage et ils permettent de régler la température dans une large gamme. Ils sont souvent associés à un radiateur et permettent par exemple la régulation de la température dans une pièce.

Les robinets thermostatiques sont généralement constitués d'une part d'une tête thermostatique et d'autre part d'un corps de robinet renfermant un mécanisme de réglage du débit à clapet à aiguille de commande, coiffé d'une bonnette de protection remplissant également le rôle de bouton de manoeuvre pour le réglage du robinet thermostatique. La tête thermostatique comporte de manière connue une douille principale fixée sur le corps de robinet, un support de sonde sur lequel est montée une sonde ou élément thermostatique, ainsi qu'un équipage mobile permettant l'ouverture et la fermeture du robinet.

Le réglage du robinet thermostatique se fait généralement en agissant directement sur le bouton de manoeuvre. Celui-ci est en effet accessible directement car il se trouve sur un côté d'un radiateur, du côté de l'alimentation en eau chaude du radiateur.

Cependant, dans certaines configurations, lorsque le raccord d'un radiateur ne se fait pas latéralement comme c'est habituellement le cas, mais que ce raccord est central, le fait de placer le robinet thermostatique sur l'un des côtés du radiateur ne permet pas de garder la symétrie obtenue par le raccordement central du radiateur. Cette configuration oblige également à compliquer le montage du robinet, car celui-ci ne se trouve plus au niveau du raccord du radiateur sur le circuit de fluide de chauffage.

La présente invention a alors pour but de fournir un dispositif de commande pour robinet thermostatique permettant de simplifier le montage du robinet thermostatique sur un radiateur dans le cas d'un raccordement central de ce radiateur sur un circuit de fluide de chauffage.

À cet effet, le dispositif de commande qu'elle propose est un dispositif de commande pour un robinet thermostatique muni d'une tête thermostatique présentant une douille principale fixée sur un corps de robinet, un support de sonde coulissant par rapport à la douille ainsi qu'une sonde et un équipage mobile.

Selon l'invention, le dispositif de commande comporte un organe de commande monté pivotant autour d'un axe de rotation sensiblement perpendiculaire à la douille principale et des moyens sont prévus pour transformer le mouvement rotatif de l'organe de commande en mouvement linéaire et transmettre ce dernier au support de sonde.

De cette manière, la commande ne se fait plus en tournant un bouton par rapport à l'axe de la douille, mais perpendiculairement à celle-ci.

Dans une forme de réalisation préférée, l'organe de commande est un plateau sur une face duquel est réalisée une rainure non circulaire et un doigt solidaire du support de sonde est logé à l'intérieur de la rainure. Dans cette forme de réalisation, pour diminuer les frottements entre le plateau et le doigt, un galet est avantageusement monté libre en rotation sur le doigt et est disposé dans la rainure.

Une autre forme d'exécution pourrait par exemple prévoir un plateau en forme de roue dentée et une crémaillère solidaire du support de la sonde.

Dans une variante de réalisation, la sonde est mobile par rapport au support de sonde, la position de la sonde par rapport à son support étant réglable en vue de l'étalonnage du robinet.

Selon une autre variante, l'organe de commande comporte en son centre, du côté extérieur, un logement destiné à recevoir une bague d'étalonnage.

Pour faciliter la commande du robinet thermostatique, l'organe de commande est muni d'une tige à l'extrémité de laquelle se trouve un bouton de manoeuvre. La commande du robinet peut alors se faire à distance.

L'invention concerne également un robinet thermostatique comportant un dispositif de commande tel que décrit ci-dessus, ainsi qu'un module de commande et de régulation caractérisé en ce qu'il comporte un raccord d'alimentation en fluide de chauffage, un raccord de retour du fluide de chauffage, une plaque embase sur laquelle sont fixés les deux raccords, une liaison souple partant de chaque raccord, un raccord de liaison reliant une liaison souple à un radiateur et un robinet thermostatique selon l'invention, monté d'une part sur l'autre liaison souple et relié d'autre part par un raccord de liaison au radiateur.

De toute façon, l'invention sera bien comprise à l'aide de la description qui suit, en référence au dessin schématique annexé, représentant à titre d'exemples quelques formes de réalisation selon l'invention.
Figure 1 est une vue en perspective d'un radiateur muni d'un robinet thermostatique équipé d'un dispositif de commande selon l'invention,
Figure 2 montre en coupe longitudinale et à échelle agrandie une première forme de réalisation d'un dispositif de commande selon l'invention,
Figure 3 est une vue semblable à la vue précédente pour une autre forme d'exécution, et
Figure 4 est une vue de dessus du dispositif de la figure précédente.

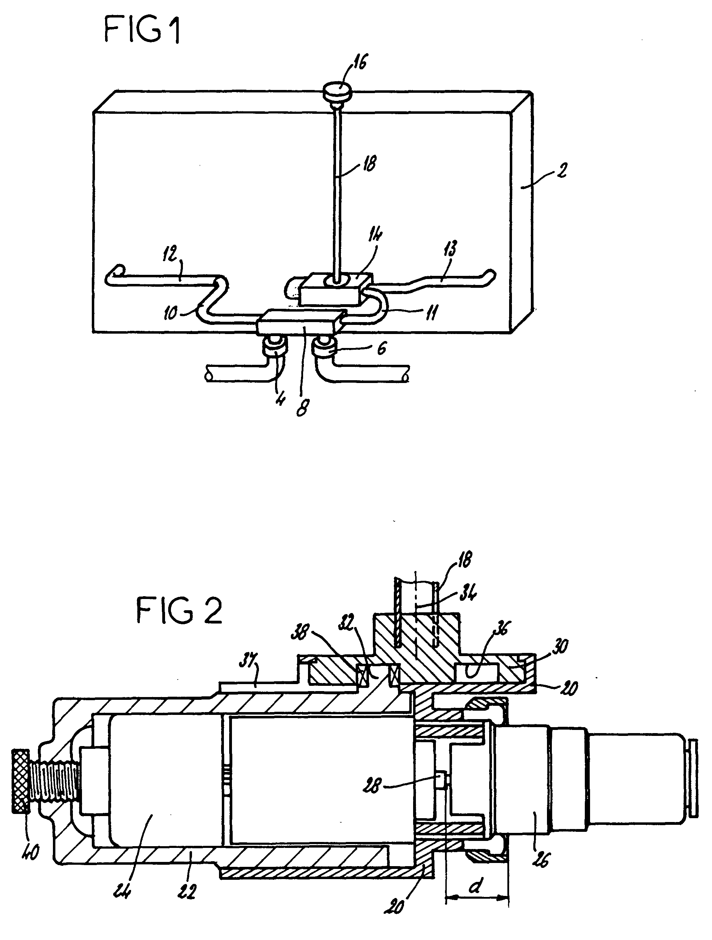

La figure 1 représente un radiateur de chauffage 2. Celui-ci comporte un ou plusieurs panneaux. Ce radiateur est raccordé à l'aide de deux raccords centraux. Un premier raccord 4 permet l'alimentation en fluide de chauffage du radiateur 2. Le second raccord 6 est un raccord de retour. Ces deux raccords servent au branchement du radiateur 2 sur un circuit de fluide de chauffage dont seules deux extrémités de tuyau sont représentées au dessin.

Les deux raccords 4,6 sont montés sur une plaque embase 8. Le premier raccord 4 permet l'alimentation du radiateur 2 par l'intermédiaire d'une liaison souple 10 et d'un raccord de liaison 12 rigide.

Le retour du liquide de chauffage se fait par un raccord de liaison 13 qui relie le radiateur 2 à un robinet thermostatique 14 et par une liaison souple 11 montée entre le robinet thermostatique et la plaque embase 8.

Le robinet thermostatique 14 est commandé à l'aide d'un bouton 16 se trouvant à une extrémité d'une tige 18 dont l'autre extrémité est montée sur le robinet 14. En effet, pour des raisons esthétiques, le montage montré sur la figure 1 est placé de telle sorte que les raccords 4,6 ne soient pas visibles et ils se trouvent ainsi par exemple entre un mur et le radiateur 2. De ce fait, le robinet thermostatique 14 n'est pas facilement accessible. La tige 18 et le bouton 16 sont placés de telle manière qu'ils permettent de commander aisément le robinet tout en ne nuisant pas à l'esthétique obtenue grâce au montage central réalisé.

Les dispositifs de commande conventionnels pour robinets thermostatiques ne conviennent pas dans une telle configuration. Le dispositif de commande représenté au dessin pour cette configuration est décrit plus en détail ci-après.

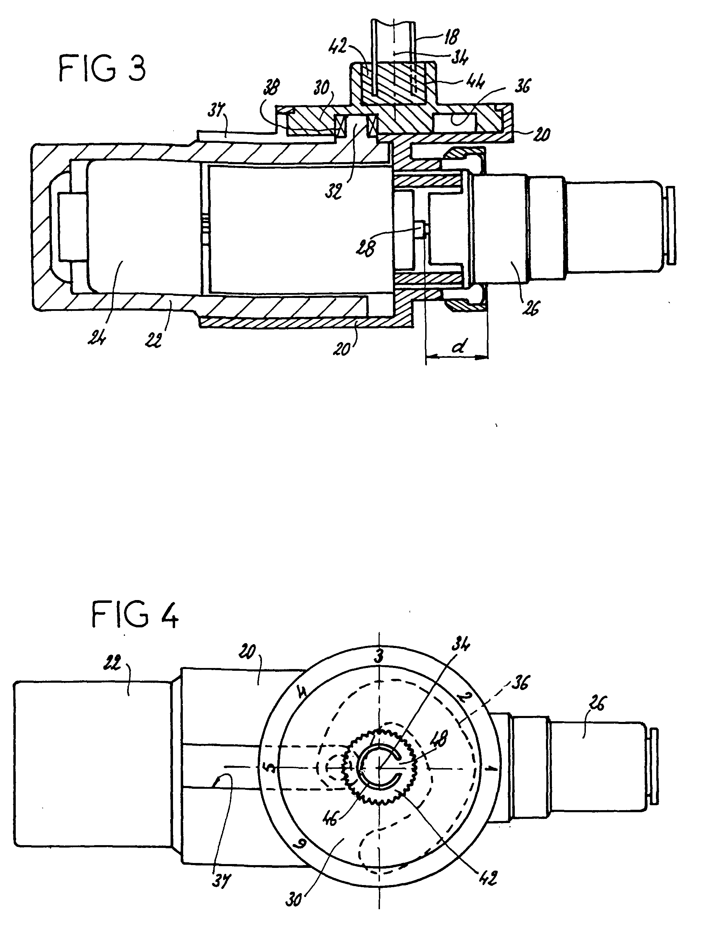

Les deux variantes d'exécution des figures 2 et 3 sont assez proches. Le principe de commande de ces deux variantes reste le même, mais leur procédé d'étalonnage est différent. Ces deux figures montrent une tête de robinet thermostatique. Le robinet thermostatique 14 comporte un corps de robinet qui n'est pas représenté au dessin. La tête de robinet montrée présente une douille principale 20, un support de sonde 22, une sonde 24 et un équipage mobile 26.

La douille principale 20 est destinée à être fixée au corps de robinet à l'aide par exemple d'un écrou (non représenté).

Le support de sonde 22 est monté coulissant dans la douille 20. Il porte la sonde 24 qui est soit fixée dans le support de sonde 22 (figure 3), soit mobile dans ce dernier (figure 2).

La sonde 24 et l'équipage mobile 26 sont par exemple similaires à ceux décrits dans la demande de brevet européen n° 0 694 722. On retrouve notamment un insert 28 d'actionnement d'aiguille de commande de clapet.

La commande de ce robinet thermostatique 14 est réalisée à l'aide d'une pièce présentant la forme d'un plateau et appelée ci-après came 30 et d'un doigt 32.

La came 30 est montée pivotante autour d'un axe de rotation 34. Sur sa face extérieure elle reçoit la tige 18. Sur sa face intérieure, orientée vers la tête de robinet thermostatique, est réalisée une rainure 36. La forme de cette rainure est visible en pointillés sur la figure 4. Comme on peut le constater, la distance de l'axe de rotation 34 à la ligne médiane de la rainure n'est pas constante. Ainsi, lorsque le doigt 32 se trouve dans la rainure 36 et que la came 30 est entraînée en rotation, le doigt 32 est entraîné en translation. De cette manière, il est donc possible de faire coulisser le support de sonde 22 dans la douille principale 20.

Pour éviter des frottements, un galet 38 est placé entre le doigt 32 et la rainure 36. Il est monté libre en rotation autour du doigt 32. Il est également possible de prévoir un roulement à la place du galet 38 de manière à réduire au maximum les frottements entre la came 30 et le support de sonde 22.

De plus, une fente 37 est prévue dans la douille principale 20 pour permettre le montage du support de la sonde 22 avec son doigt 32 dans la douille 20. Cette fente 37 sert également de guide pour le doigt 32 lorsque le support de la sonde 22 se déplace dans la douille 20.

La commande du robinet thermostatique 14 s'effectue ainsi à l'aide du bouton de commande 16. L'utilisateur tourne le bouton 16 lorsqu'il souhaite modifier le réglage du robinet thermostatique 14 et faire varier la température de la pièce dans laquelle il se trouve. La manoeuvre du bouton 16 est transmise par la tige 18 à la came 30. Une rotation de cette dernière induit une translation du support de sonde 22 et de la sonde 24 qui lui est associée.

Selon la forme de réalisation, deux procédés d'étalonnage de la tête de robinet thermostatique sont possibles.

Pour la tête thermostatique représentée à la figure 2, la came 30 est mise dans une position prédéterminée qui est par exemple repérée à l'aide de repères, un repère gravé sur la came 30 et un autre sur la douille principale 20 à proximité de la came 30. On peut par exemple placer le repère "*" de la came 30 face au repère "3" de la douille 20 (sur la figure 4 le repère "*" est face au repère "1").

La tête de robinet est alors placée dans un bain thermostatique dont la température est parfaitement contrôlée. Après stabilisation en température, une vis de réglage 40 est tournée de telle sorte que la distance d entre l'extrémité de l'insert 28 et l'extrémité libre de la douille principale 20 soit égale à une distance prédéterminée. La vis de réglage 40 prend appui à son extrémité sur la sonde 24 et est vissée dans le support de sonde 22.

La cote d est contrôlée. Lorsque cette cote est exacte, on sait que par la suite, lorsque le repère "*" de la came se trouve face du repère "3" de la douille 20, la position de la came correspond à la température du bain thermostaté.

L'étalonnage est réalisé de façon différente avec la tête de robinet thermostatique de la figure 3.

Le procédé d'étalonnage commence en immergeant la tête de robinet thermostatique dans un bain thermostaté. Après stabilisation en température, la came 30 est tournée de telle sorte que la distance d entre l'extrémité de l'insert 28 et l'extrémité libre de la douille 20 soit égale à une valeur prédéterminée par le constructeur et qui dépend entre autres, comme pour la forme d'exécution précédente, de l'équipage mobile 26 et du corps de robinet.

Lorsque la distance d est ajustée à la valeur prédéterminée et après contrôle de cette cote, une bague d'étalonnage 42 est introduite dans un logement 44 ménagé dans la face extérieure de la came 30. La bague d'étalonnage 42 et son logement 44 présentent des cannelures périphériques complémentaires. La bague 42 peut donc prendre un nombre important de positions, correspondant au nombre de cannelures, dans son logement 44.

La bague d'étalonnage comporte elle même un logement 46 pour recevoir la tige 18. Ce logement 46 est de forme circulaire et est quasi annulaire : il est en forme de C dont les deux extrémités sont proches l'une de l'autre. La zone placée entre les deux extrémités du logement 46 constitue un repère 48. Lorsque la bague d'étalonnage 42 est introduite dans son logement 44, le repère 48 est placé par exemple en face du repère "3" de la douille principale 20 (sur la figure 4, le repère 48 est placé face au repère "1" de la douille).

L'étalonnage est ainsi réalisé. Lorsque le repère 48 se trouve face au repère "3" de la douille, la tête de robinet thermostatique est réglée pour une température correspondant à celle du bain thermostaté.

La forme du logement 46 pour la tige 18 ne permet qu'une seule position de la tige 18 par rapport à la came 30. Ainsi il est facile de reporter sur le bouton de commande 16 les indications figurant sur la douille 20. Ces indications peuvent ainsi être visibles facilement pour l'utilisateur.

Comme il va de soi, l'invention ne se limite pas aux formes de réalisation décrites ci-dessus à titre d'exemples non limitatifs ; elle en embrasse au contraire toutes les variantes.

Ainsi par exemple, le déplacement relatif du support de la sonde par rapport à la douille peut s'effectuer à l'aide d'un pignon qui remplacerait la came et d'une crémaillère qui serait solidaire du support de la sonde.

D'autres montages du robinet thermostatique sont également envisageables. Le montage proposé est un montage avantageux dans le cas d'un raccordement central du radiateur.

Le dispositif de commande peut également être utilisé avec une tête de robinet thermostatique différente de celle décrite dans la demande de brevet EP-0 694 722.

## Revendications

1. Dispositif de commande pour un robinet thermostatique (14) muni d'une tête thermostatique présentant une douille principale (20) fixée sur un corps de robinet, un support de sonde (22) coulissant par rapport à la douille (20) ainsi qu'une sonde (24) et un équipage mobile (26),
**caractérisé en ce qu'**il comporte un bouton de manoeuvre (16) ainsi qu'une tige (18) ou similaire permettant de transmettre le mouvement du bouton de manoeuvre (16) à un organe de commande (30) monté pivotant autour d'un axe de rotation (34) sensiblement perpendiculaire à la douille principale (20) et **en ce que** des moyens (36,32) sont prévus pour transformer le mouvement rotatif de l'organe de commande (30) en mouvement linéaire et transmettre ce dernier au support de sonde (22).

2. Dispositif de commande selon la revendication 1, **caractérisé en ce que** l'organe de commande (30) est un plateau sur une face duquel est réalisée une rainure (36) non circulaire et **en ce qu'**un doigt (32) solidaire du support de sonde (22) est logé à l'intérieur de la rainure (36).

3. Dispositif de commande selon la revendication 2, **caractérisé en ce qu'**un galet (38) est monté libre en rotation sur le doigt (32) et est disposé dans la rainure (36).

4. Dispositif de commande selon l'une des revendications 1 à 3, **caractérisé en ce que** la sonde (24) est mobile par rapport au support de sonde (22), la position de la sonde (24) par rapport à son support (22) étant réglable en vue de l'étalonnage du robinet (14).

5. Dispositif de commande selon l'une des revendications 1 à 3, **caractérisé en ce que** l'organe de commande (30) comporte en son centre, du côté extérieur, un logement (44) destiné à recevoir une bague d'étalonnage (42).

6. Dispositif de commande selon l'une des revendications 1 à 5, **caractérisé en ce que** l'organe de commande (30) est muni d'une tige (18) à l'extrémité de laquelle se trouve un bouton de manoeuvre (16).

7. Robinet thermostatique, **caractérisé en ce qu'**il comporte un dispositif de commande selon l'une des revendications 1 à 6.

8. Module de commande et de régulation **caractérisé en ce qu'**il comporte un raccord d'alimentation (4) en fluide de chauffage, un raccord de retour (6) du fluide de chauffage, une plaque embase (8) sur laquelle sont fixés les deux raccords (4,6), une liaison souple (10,11) partant de chaque raccord, un raccord de liaison (12) reliant une liaison souple (10) à un radiateur (2) et un robinet thermostatique (14) selon la revendication 7, monté d'une part sur l'autre liaison souple (11) et relié d'autre part par un raccord de liaison (13) au radiateur (2).

9. Radiateur de chauffage, **caractérisé en ce qu'**il est équipé d'un robinet thermostatique (14) selon la revendication 7.

10. Radiateur de chauffage, **caractérisé en ce qu'**il est équipé d'un module de commande et de régulation selon la revendication 8.

## Patentansprüche

1. Steuerungsvorrichtung für ein Thermostatventil (14), das mit einem Thermostatkopf, der eine auf einem Ventilkörper befestigte Haupthülse (20) aufweist, einem bezüglich der Hülse (20) gleitenden Sondenhalter (22), sowie einer Sonde (24) und einer beweglichen Einrichtung (26) ausgestattet ist,
**dadurch gekennzeichnet, daß** sie einen Betätigungsknopf (16) sowie einen Stift (18) oder dergleichen aufweist, der es gestattet, die Bewegung des Knopfes (16) auf eine Steuerungseinheit (30) zu übertragen, die um eine im wesentlichen senkrecht zu der Haupthülse (20) verlaufende Drehachse (34) drehbar gelagert ist, und daß Mittel (36, 32) vorgesehen sind, um die Drehbewegung der Steuerungseinheit (30) in eine geradlinige Bewegung umzuwandeln und diese auf den Sondenhalter (22) zu übertragen.

2. Steuerungsvorrichtung nach Anspruch 1, **dadurch gekennzeichnet, daß** die Steuerungseinheit (30) eine Platte ist, bei der auf einer Fläche eine nicht-kreisförmige Rille (36) ausgebildet ist, und daß eine mit dem Sondenhalter (22) einstückige Nase (32) im Innern der Rille (36) sitzt.

3. Steuerungsvorrichtung nach Anspruch 2, **dadurch gekennzeichnet, daß** eine Rolle (38) frei drehbar auf der Nase (32) gelagert ist und in der Rille (36) angeordnet ist.

4. Steuerungsvorrichtung nach einem der Ansprüche 1 bis 3, **dadurch gekennzeichnet, daß** die Sonde (24) bezüglich des Sondenhalters (22) beweglich ist, wobei die Stellung der Sonde (24) bezüglich ihres Halters (22) für die Eichung des Ventils (14) einstellbar ist.

5. Steuerungsvorrichtung nach einem der Ansprüche 1 bis 3, **dadurch gekennzeichnet, daß** die Steuerungseinheit (30) in ihrer Mitte auf der Außenseite einen Sitz (44) aufweist, der zur Aufnahme eines Eichringes (42) dient.

6. Steuerungsvorrichtung nach einem der Ansprüche 1 bis 5, **dadurch gekennzeichnet, daß** die Steuerungseinheit (30) mit einem Stift (18) ausgestattet ist, an dessen Ende sich ein Betätigungsknopf (16) befindet.

7. Thermostatventil, **dadurch gekennzeichnet, daß** es eine Steuerungsvorrichtung nach einem der Ansprüche 1 bis 6 aufweist.

8. Steuer- und Regelmodul, **dadurch gekennzeichnet, daß** es einen Anschluß für die Zufuhr (4) von Heizfluid, einen Anschluß für den Rücklauf (6) des Heizfluids, eine Basisplatte (8), auf der die beiden Anschlüsse (4, 6) befestigt sind, eine von jedem Anschluß ausgehende nachgiebige Verbindung (10, 11), einen Verbindungsanschluß (12), der eine nachgiebige Verbindung (10) mit einem Radiator (2) und einem Thermostatventil (14) nach Anspruch 7 verbindet, aufweist, das einerseits auf der anderen nachgiebigen Verbindung (11) montiert ist, und andererseits über einen Verbindungsanschluß (13) mit dem Radiator (2) verbunden ist.

9. Heizradiator, **dadurch gekennzeichnet, daß** er mit einem Thermostatventil (14) nach Anspruch 7 ausgestattet ist.

10. Heizradiator, **dadurch gekennzeichnet, daß** er mit einem Steuer- und Regelmodul nach Anspruch 8 ausgestattet ist.

## Claims

1. Control device for a thermostatic valve (14) provided with a thermostatic head, with a main bush (20) which is secured to a valve body, a sensor support (22) which slides relative to the bush (20), as well as a sensor (24) and a mobile device (26),
**characterised in that** it comprises a manoeuvring button (16), as well as a rod (18) or the like, which makes it possible to transmit the movement of the manoeuvring button (16) to a control unit (30), which is fitted such as to pivot around an axis of rotation (34), which is substantially perpendicular to the main bush (20), and **in that** means (36, 32) are provided for transforming the rotary movement of the control unit (30) into linear movement, and transmitting the latter to the sensor support (22).

2. Control device according to claim 1, **characterised in that** the control unit (30) is a plate, in a surface of which there is provided a non-circular groove (36), and **in that** a finger (32), which is integral with the sensor support (22), is accommodated inside the groove (36).

3. Control device according to claim 2, **characterised in that** a roller (38) is fitted such as to rotate freely on the finger (32), and is disposed in the groove (36).

4. Control device according to any one of claims 1 to 3, **characterised in that** the sensor (24) is mobile relative to the sensor support (22), the position of the sensor (24) relative to its support (22) being able to be regulated for the purpose of adjustment of the valve (14).

5. Control device according to any one of claims 1 to 3, **characterised in that** in its centre, on the outer side, the control unit (30) has a receptacle (44), which is designed to receive an adjustment ring (42).

6. Control device according to any one of claims 1 to 5, **characterised in that** the control unit (30) is provided with a rod (18), at the end of which there is a manoeuvring button (16).

7. Thermostatic valve, **characterised in that** it comprises a control device according to any one of claims 1 to 6.

8. Control and regulation module, **characterised in that** it comprises a connection (4) for the supply of heating fluid, a connection (6) for return of the heating fluid, a base plate (8), on which there are secured the two connections (4, 6), a flexible link (10, 11) which extends from each connection, a linking connection (12), which connects a flexible connection (10) to a radiator (2), and a thermostatic valve (14) according to claim 7, which is firstly fitted on the other flexible connection (11), and is secondly connected by a linking connection (13) to the radiator (2).

9. Heating radiator, **characterised in that** it is equipped with a thermostatic valve (14) according to claim 7.

10. Heating radiator, **characterised in that** it is equipped with a control and regulation module according to claim 8.
